# EUROPÄISCHE PATENTSCHRIFT

(11) **EP 1 538 034 B1**
(45) Veröffentlichungstag und Bekanntmachung des Hinweises auf die Patenterteilung: **17.05.2006**
(21) Anmeldenummer: 04027610.7
(22) Anmeldetag: 20.11.2004
(51) Int. Cl.: B60R 21/20

(54) **Sicherheitseinrichtung zum seitlichen Schutz zumindest des Kopf- und Thoraxbereichs**
Safety device for lateral protection of head and thorax of a vehicle occupant
Dispositif de sécurité lateral pour tête et thorax

(30) Priorität: 02.12.2003 DE 10356139
(43) Veröffentlichungstag der Anmeldung: 08.06.2005
(73) Patentinhaber: DaimlerChrysler AG, 70567 Stuttgart (DE)
(72) Erfinder: Röhm, Michael, 71701 Schwieberdingen (DE); Schick, Ulrich, 72202 Nagold (DE)

(56) Entgegenhaltungen:
- DE-U1- 29 722 793
- US-A- 6 059 311
- US-A- 6 073 960
- US-B1- 6 428 038

## Beschreibung

Die Erfindung bezieht sich auf eine Sicherheitseinrichtung mit einem Gassack zum seitlichen Schutz zumindest des oberen Bereichs einer in einem Fahrzeugsitz eines Kraftfahrzeugs befindlichen Person gemäß dem Oberbegriff als Anspruchs 1, insbesondere mit einem Gehäuse zur Aufnahme des Gassacks im inaktiven Zustand, der mittels eines Gasgenerators derart befüllbar ist, dass er sich seitlich der Person und im Wesentlichen parallel zur Längsmittelachse des Kraftfahrzeugs entfaltet, siehe die gattungsbildende US-B-6 428 038.

Es ist bereits eine Sicherheitseinrichtung mit einem Gassack zum seitlichen Schutz zumindest des oberen seitlichen Bereichs einer im Fahrzeugsitz eines Kraftfahrzeugs befindlichen Person mit einem Gehäuse zur Aufnahme des Gassacks im inaktiven Zustand bekannt (EP 0 584 781 B1), der mittels eines Gasgenerators derart befüllt wird, dass er sich seitlich der Person und im Wesentlichen parallel zur Längsmittelachse des Kraftfahrzeugs nach unten entfaltet und dabei nur den Kopfbereich einer im Fahrzeug befindlichen Person abdeckt.

Der Erfindung liegt die Aufgabe zugrunde, eine Sicherheitseinrichtung mit einem Gassack zum seitlichen Schutz zumindest des oberen seitlichen Bereichs einer im Fahrzeugsitz eines Kraftfahrzeugs befindlichen Person derart auszubilden und anzuordnen, dass bei Auftreten einer Störgröße ein optimaler Schutz des Kopf- und Thoraxbereichs einer im Fahrzeug befindlichen Person gewährleistet ist.

Gelöst wird die Aufgabe bei eine gattungsgemäßen Sicherheitseinrichtung erfindungsgemäß dadurch, dass das Gehäuse zur Aufnahme des Gassacks die Form eines sich mit Bezug auf die Fahrtrichtung nach vorne erweiternden Bügels aufweist. Hierdurch wird auf einfache und kostengünstige Weise erreicht, dass sich bei einem auftretenden Verkehrsunfall der Gassack in alle Richtungen, vorzugsweise nach vorne, blitz-artig befüllt, sich dabei seitlich der im Fahrzeug befindlichen Person erstreckt und dadurch den Kopf- und Thoraxbereich voll-ständig abdeckt. Dies wird auch dadurch erreicht, dass das Gehäuse zur Aufnahme des Gassacks in oder an einem seitlich zum Fahrzeugsitz verlaufenden Seitenteil der Fahrzeugkarosserie integriert ist.

Hierzu ist es vorteilhaft, dass eine Erstreckungsrichtung (X-Richtung) des Gassacks mit Bezug auf die Fahrtrichtung im Wesentlichen nach vorne und unten verläuft.

Eine zusätzliche Möglichkeit ist gemäß einer Weiterbildung, dass das Gehäuse zur Aufnahme des Gassacks mit Bezug auf die Fahrtrichtung hinter dem Fahrzeugsitz und/oder der Person angeordnet und in etwa v-förmig ausgebildet ist und sich von einer A-Säule bzw. vorderen Stelle am Seitenholm über den Kopfbereich bzw. den Dachholm, den Thoraxbereich bis zum Gesäßbereich oder einer unteren Stelle an der B-Säule erstreckt. Hierdurch wird für die Insassen seitlich ein optimaler Schutz gebildet.

Ferner ist es vorteilhaft, dass sich der Gassack bei Auftreten einer Störgröße im Wesentlichen in die nach vorne erstreckende und in etwa geneigt verlaufende X-Richtung zwischen den beiden Stellen entfaltet und dabei derart gespannt wird, dass er den seitlichen Kopf- und Thoraxbereich und den Abdomenbereich abdeckt, wobei die geneigt verlaufende X-Richtung mit Bezug auf die Standfläche des Fahrzeugs einen Winkel α zwischen ca. 5° und 60° oder 15° und 45° einschließen kann. Hierdurch wird ein optimaler seitlicher Schutz erreicht.

Vorteilhaft ist es hierzu auch, dass die Seitenfläche des Gassacks im aktiven Zustand zumindest den Kopf- und Thoraxbereich und/oder den Gesäß- und Oberschenkelbereich abdeckt.

Gemäß einer bevorzugten Ausführungsform der erfindungsgemäßen Lösung ist schließlich vorgesehen, dass das Gehäuse aus mehreren miteinander verbundenen Gehäuseabschnitten besteht, die einen Winkel β in etwa zwischen 20° und 80° oder 30° und 70° einschließen.

Von besonderer Bedeutung ist für die vorliegende Erfindung, dass das Gehäuse aus drei miteinander verbundenen Gehäuseabschnitten besteht, wobei die beiden äußeren Gehäuseteile über das Bogenteil miteinander verbunden sind und einen Winkel β in etwa zwischen 20° und 80° oder 30° und 70° einschließen.

Im Zusammenhang mit der erfindungsgemäßen Ausbildung und An-ordnung ist es von Vorteil, dass das Gehäuse des Gassacks in Teilen eines Dachholms und/oder in Teilen des Seitenholms und/oder in Teilen eines Bodenholms des Fahrzeugs integriert ist.

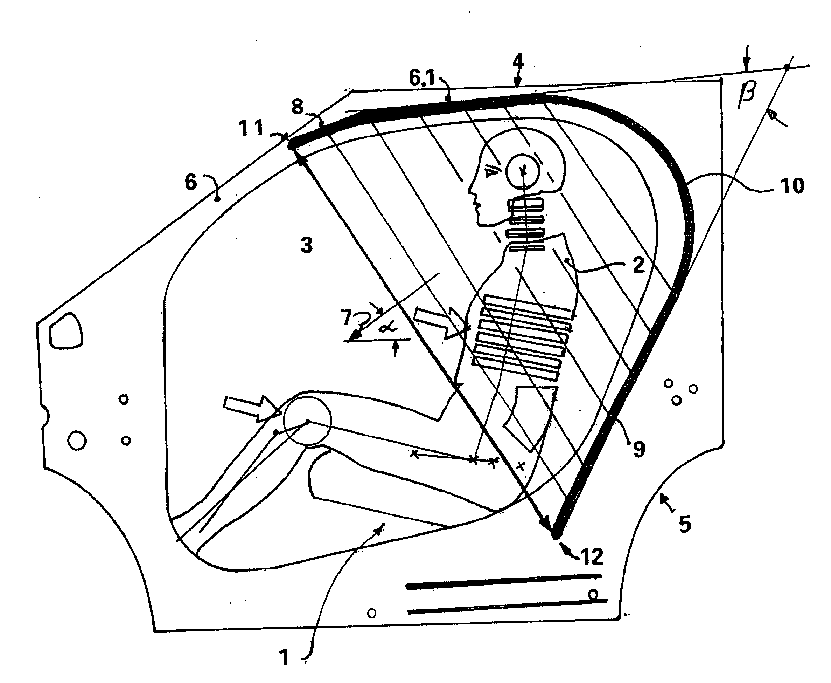

Weitere Vorteile und Einzelheiten der Erfindung sind in den Patentansprüchen und in der Beschreibung erläutert und in der Zeichnung dargestellt.

In der Zeichnung ist eine Sicherheitseinrichtung mit einem Gassack 3 zum seitlichen Schutz zumindest des Kopf- und Thoraxbereichs einer in einem Fahrzeugsitz 1 eines Kraftfahrzeugs befindlichen Person 2 dargestellt.

Ein Gehäuse 4 dient zur vollständigen Aufnahme des Gassacks 3 bzw. Airbagmoduls im inaktiven Zustand.

Wie aus der Zeichnung ferner hervorgeht, ist das Gehäuse 4 zur Aufnahme des Gassacks 3 seitlich an der Fahrzeugkarosserie 5 untergebracht bzw. in einem nur schematisch dargestellten Seitenholm 6, einem Dachholm 6.1 und/oder in Teilen eines in der Zeichnung nur schematisch dargestellten Bodenholms bzw. einer B-Säule des Fahrzeugs integriert. Das Gehäuse 4 ist als einteiliges, durchgehendes Gehäuse 4 ausgebildet und besteht aus drei miteinander verbundenen Gehäuseabschnitten 8, 9, 10, die in etwa V-förmig zueinander ausgerichtet sind und einen Winkel β in etwa zwischen 110° und 140° einschließen. Die beiden äußeren Gehäuseabschnitte 8, 9 sind über das mittlere Bogenteil 10 miteinander fest verbunden.

Das an der Karosserie 5 befestigte Gehäuse 4 erstreckt sich von der A-Säule oder dem Seitenholm 6 bzw. einem oberen Punkt 11 bis zu einem Schweller-Punkt 12 bzw. bzw. einer unteren Stelle im Bereich der B-Säule bzw. im Bereich des Fahrersitzes 1.

Das Gehäuse 4 dient zur Aufnahme des Gassacks 3, der zum seit-lichen Schutz zumindest des Kopf-, Thorax- und Abdomenbereichs dient. Das Gehäuse, und somit auch der Gassack 3 erstrecken sich zwischen einem oberen bzw. vorderen Punkt 11 zu einem unteren Schweller-Punkt 12. Somit kann sich bei einer Störgröße der Gassack 3 großflächig entfalten und blitzartig den Kopf- und Thoraxbereich und/oder auch den Gesäß- und Oberschenkelbereich bzw. Abdomenbereich abdecken.

Mittels eines in der Zeichnung nicht dargestellten Gasgenerators wird der Gassack bzw. Airbag 3 derart befüllt, dass er sich seitlich der Person 2 und im Wesentlichen parallel zur Längsmittelachse des Kraftfahrzeugs in eine X-Richtung 7 entfaltet. Die in der X-Richtung 7 verlaufende Ebene verläuft in Fahrtrichtung geneigt nach unten und bildet mit der Horizontalen bzw. der Standfläche des Fahrzeugs einen Winkel α zwischen ca. 5° und 60° oder 15° und 45°.

Besonders vorteilhaft ist es, dass sich durch das Befüllen des Gassacks bzw. Airbags 3 sich dieser zwischen der vorderen Stelle 11 an der A-Säule und der unteren Stelle bzw. dem Schweller-Punkt 12 an der B-Säule entfaltet und dabei derart gespannt wird, dass er den Kopf- und Thoraxbereich und den Abdomenbereich abdeckt und hierdurch einen optimalen Schutz für den Insassen bietet.

## Patentansprüche

1. Sicherheitseinrichtung mit einem Gassack (3) zum seitlichen Schutz zumindest des oberen Bereichs einer in einem Fahrzeugsitz (1) eines Kraftfahrzeugs befindlichen Person (2) mit einem Gehäuse (4) zur Aufnahme des Gassacks (3) im inaktiven Zustand, der mittels eines Gasgenerators derart befüllbar ist, dass er sich seitlich der Person (2) und im Wesentlichen parallel zur Längsmittelachse des Kraftfahrzeugs entfaltet, wobei
das Gehäuse (4) zur Aufnahme des Gassacks (3) in oder an einem seitlich zum Fahrzeugsitz (1) verlaufenden Seitenteil einer Fahrzeugkarosserie (5) integriert ist, wobei der Gassack (3) im aktiven Zustand zumindest den Kopf- und Thoraxbereich abdeckt, **dadurch gekennzeichnet, dass** das gehäuse (4) die Form eines sich mit Bezug auf die Fahrtrichtung nach vorne erweiternden Bügels aufweist.

2. Vorrichtung nach Anspruch 1,
**dadurch gekennzeichnet,**
**dass** eine Erstreckungsrichtung (X-Richtung) (7) des Gassacks (3) mit Bezug auf die Fahrtrichtung im Wesentlichen nach vorne und unten verläuft.

3. Vorrichtung nach Anspruch 1,
**dadurch gekennzeichnet,**
**dass** das Gehäuse (4) zur Aufnahme des Gassacks (3) mit Bezug auf die Fahrtrichtung hinter dem Fahrzeugsitz (1) und/oder der Person (2) angeordnet und in etwa v-förmig ausgebildet ist und sich von einer A-Säule bzw. vorderen Stelle (11) am Seitenholm (6) über den Kopfbereich bzw. den Dachholm (6.1), den Thoraxbereich bis zum Gesäßbereich oder einer unteren Stelle (12) an der B-Säule erstreckt.

4. Vorrichtung nach Anspruch 1 oder 2,
**dadurch gekennzeichnet,**
**dass** sich der Gassack (3) bei Auftreten einer Störgröße im Wesentlichen in die nach vorne erstreckende und in etwa geneigt verlaufende X-Richtung (7) zwischen den beiden Stellen 11, 12 entfaltet und dabei derart gespannt wird, dass er den seitlichen Kopf- und Thoraxbereich und den Abdomenbereich abdeckt, wobei die geneigt verlaufende X-Richtung (7) mit Bezug auf die Standfläche des Fahrzeugs einen Winkel α zwischen ca. 5° und 60° oder 15° und 45° einschließen kann.

5. Vorrichtung nach einem der vorhergehenden Ansprüche,
**dadurch gekennzeichnet,**
**dass** die Seitenfläche des Gassacks (3) im aktiven Zustand zumindest den Kopf- und Thoraxbereich und/oder den Gesäß- und Oberschenkelbereich abdeckt.

6. Vorrichtung nach einem der vorhergehenden Ansprüche,
**dadurch gekennzeichnet,**
**dass** das Gehäuse (4) aus mehreren miteinander verbundenen Gehäuseabschnitten (8, 9, 10) besteht, die einen Winkel β in etwa zwischen 20° und 80° oder 30° und 70° einschließen.

7. Vorrichtung nach einem der vorhergehenden Ansprüche,
**dadurch gekennzeichnet,**
**dass** das Gehäuse (4) aus drei miteinander verbundenen Gehäuseabschnitten (8, 9, 10) besteht, wobei die beiden äußeren Gehäuseteile (8 und 9) über das Bogenteil (10) miteinander verbunden sind und einen Winkel β in etwa zwischen 20° und 80° oder 30° und 70° einschließen.

8. Vorrichtung nach einem der vorhergehenden Ansprüche,
**dadurch gekennzeichnet,**
**dass** das Gehäuse (4) des Gassacks (3) in Teilen eines Dachholms (6.1) und/oder in Teilen des Seitenholms (6) und/oder in Teilen eines Bodenholms des Fahrzeugs integriert ist.

## Claims

1. Safety device with a gas bag (3) for providing lateral protection for at least the upper region of a person (2) occupying a vehicle seat (1) of a motor vehicle, with a housing (4) for accommodating the gas bag (3) in the inactive state, which is inflated by a gas generator so that it unfolds to the side of the person (2) and essentially parallel with the longitudinal mid-axis of the motor vehicle, which housing (4) for accommodating the gas bag (3) is integrated in or on a side part of a vehicle body (5) extending to the side of the vehicle seat (1),
**characterised in that**
the shape of the housing (4) is that of a bow extending forwards by reference to the direction of travel, and the gas bag (3) covers at least the head and thorax region in the active state.

2. Device as claimed in claim 1,
**characterised in that**
a direction (X-direction) (7) in which the gas bag (3) extends by reference to the direction of travel runs essentially forwards and downwards.

3. Device as claimed in claim 1,
**characterised in that**
the housing (4) for accommodating the gas bag (3) is disposed behind the vehicle seat (1) and/or the person (2) by reference to the direction of travel and is of an approximately v-shaped design, extending from an A column or front point (11) on the side strut (6) above the head region or the roof strut (6.1), the thorax region, as far as the posterior region or a bottom point (12) on the B column.

4. Device as claimed in claim 1 or 2,
**characterised in that**
when an accident variable is signalled, the gas bag (3) essentially unfolds forwards and at a slight angle between the two points 11, 12 in the X-direction (7) and in doing so is tautened so that it covers the side head and thorax region and the abdomen region, and the X-direction (7) extending at an angle can subtend an angle α of between approximately 5° and 60° or 15° and 45° with the standing surface of the vehicle.

5. Device as claimed in one of the preceding claims,
**characterised in that**
the side face of the gas bag (3) covers at least the head and thorax region and/or the posterior and upper thigh region in the active state.

6. Device as claimed in one of the preceding claims,
**characterised in that**
the housing (4) consists of several housing portions (8, 9, 10) joined to one another, which subtend an angle β of approximately between 20° and 80° or 30° and 70°.

7. Device as claimed in one of the preceding claims,
**characterised in that**
the housing (4) consists of three housing portions (8, 9, 10) jointed to one another and the two outer housing parts (8 and 9) are joined to one another by a bow part (10) and subtend an angle β of between approximately 20° and 80° or 30° and 70°.

8. Device as claimed in one of the preceding claims,
**characterised in that**
the housing (4) of the gas bag (3) is integrated in parts of a roof strut (6.1) and/or in parts of the side strut (6) and/or in parts of a floor strut of the vehicle.

## Revendications

1. Dispositif de sécurité comprenant un coussin à gaz (3) pour la protection latérale au moins de la zone supérieure d'une personne (2) se trouvant dans un siège de véhicule (1) d'un véhicule automobile avec un boîtier (4) pour le logement du coussin à gaz (3) dans l'état inactif, qui peut être rempli au moyen d'un générateur de gaz de telle sorte qu'il se déplie sur le côté de la personne (2) et sensiblement parallèlement à l'axe médian longitudinal du véhicule automobile, le boîtier (4) pour le logement du coussin à gaz (3) étant intégré dans ou sur une partie latérale, agencée sur le côté du siège du véhicule (1), d'une carrosserie automobile (5), le coussin à gaz (3) recouvrant dans l'état actif au moins la zone de la tête et du thorax, **caractérisé en ce que** le boîtier (4) présente la forme d'un étrier s'élargissant vers l'avant par rapport au sens de marche.

2. Dispositif selon la revendication 1, **caractérisé en ce qu'**une direction d'étirement (direction X) (7) du coussin à gaz (3) est agencée sensiblement vers l'avant et en bas par rapport au sens de marche.

3. Dispositif selon la revendication 1, **caractérisé en ce que** le boîtier (4) pour le logement du coussin à gaz (3) est disposé par rapport au sens de marche derrière le siège du véhicule (1) et/ou la personne (2) et est réalisé à peu près en forme de V et s'étend depuis une colonne A ou un emplacement (11) avant sur le montant latéral (6) jusqu'à la zone du fessier ou un endroit (12) inférieur sur la colonne B en passant par la zone de la tête et le montant de toit (6.1), et la zone du thorax.

4. Dispositif selon la revendication 1 ou 2, **caractérisé en ce que** le coussin à gaz (3) se déplie lors de l'apparition d'une grandeur perturbatrice essentiellement dans la direction X (7) s'étendant vers l'avant et agencé légèrement incliné entre les deux emplacements 11, 12 et est tendu alors de telle sorte qu'il recouvre la zone latérale de la tête et du thorax et la zone de l'abdomen, la direction X (7) agencée de façon inclinée pouvant former par rapport à la base du véhicule un angle α compris entre environ 5° et 6° ou 15° et 45°.

5. Dispositif selon l'une quelconque des revendications précédentes, **caractérisé en ce que** la face latérale du coussin à gaz (3) recouvre dans l'état actif au moins la zone de la tête et du thorax et/ou la zone du fessier et de la cuisse.

6. Dispositif selon l'une quelconque des revendications précédentes, **caractérisé en ce que** le boîtier (4) se compose de plusieurs sections de boîtier (8, 9, 10) reliées entre elles, qui forment un angle β compris environ entre 20° et 80° ou 30° et 70°.

7. Dispositif selon l'une quelconque des revendications précédentes, **caractérisé en ce que** le boîtier (4) se compose de trois sections de boîtier (8, 9, 10) reliées entre elles, les deux parties de boîtier (8 et 9) extérieures étant reliées entre elles au moyen de la partie d'arc (10) et formant un angle β compris environ entre 20° et 80° ou 30° et 70°.

8. Dispositif selon l'une quelconque des revendications précédentes, **caractérisé en ce que** le boîtier (4) du coussin à gaz (3) est intégré dans des parties d'un montant de toit (6.1) et/ou dans des parties du montant latéral (6) et/ou dans des parties d'un montant de plancher du véhicule.
